# EUROPEAN PATENT APPLICATION

(11) **EP 1 377 109 A2**
(43) Date of publication of application: **02.01.2004**
(21) Application number: 03013584.2
(22) Date of filing: 14.06.2003
(51) Int. Cl.: H04Q 11/04, H04J 3/16

(54) **Scalable architecture for an access node**

(30) Priority: 27.06.2002 US 184386
(71) Applicant: ALCATEL, 75008 Paris (FR)
(72) Inventor: Friedrichs, Eric, Sebastopol, CA 75472 (US); Grimes, Mark W., Petaluma, CA 94954 (US)
(74) Representative: Dreiss, Fuhlendorf, Steimle & Becker

(57) **Abstract**

A scalable architecture for use with an access node terminal disposed in an access network portion. A point-to-point, high-speed communication link provided between two adjacent banks of the access node logically interconnects a plurality of banks in a linear stack, thereby creating a stackplane hierarchy for local traffic. All interbank communications (i.e., traffic internal to the access node, such as data, inter-processor messaging, timing and synchronization) are carried on the stackplane using modified SONET carrier frames. The payload portion of the frames is mapped to hold different types of data and the overhead portion includes stackplane control and management information.

## Description

### BACKGROUND OF THE INVENTION

### Technical Field of the Invention

The present invention generally relates to telecommunications. More particularly, and not by way of any limitation, the present invention is directed to a scalable architecture for a telecommunications node disposed in an access network.

### Description of Related Art

The remote access market is undergoing a major metamorphosis. Three factors serve as catalysts for change. The first is the growing number of users, for example, small office / home office (SOHO) users, demanding high performance Internet and remote access for multimedia. Liberalized governmental activity with respect to telecommunications is another factor, which is fostering broader competition through deregulation in local area markets everywhere. The third and final factor is congestion in the Public Switched Telephone Network (PSTN), originally designed and developed for voice-only traffic.

There have been several important advances in telecommunications technology that enable high rates of throughput in carrier networks' backbone connections. For example, by implementing Asynchronous Transfer Mode (ATM) networking technology over a Synchronous Optical Network (SONET) / Synchronous Digital Hierarchy (SDH) physical layer, carrier networks can achieve data rates of up to several hundred megabits per second (Mbps). However, efforts to meet the bandwidth demand for remote access have been beset by the limitations of the existing twisted-pair copper cable infrastructure (i.e., access network) provided between a carrier's central office (CO) and a subscriber's remote site, typically referred to as the local loop. In the telecommunications art, these limitations are sometimes collectively described as the "last-mile" problem.

Current access network solutions that attempt to avoid the bottleneck created by the last-mile problem involve the use of fiber optic technology in the local loop also. As with the high-speed carrier networks, the fiber-based local loop infrastructure is typically architected using SONET as the physical layer technology. With recent developments in optical components and related optoelectronics, in addition to improvements in network design, broadband access is now becoming commonplace.

Moreover, coupled with the phenomenal growth in popularity of the Internet, there has been a tremendous interest in using packet-switched network (PSN) infrastructures (e.g., those based on Internet Protocol (IP) addressing) as a replacement for the existing circuit-switched network (CSN) infrastructures used in today's telecommunications networks. From the network operators' perspective, the inherent traffic aggregation in packet-switched infrastructures allows for a reduction in the cost of transmission and the infrastructure cost per end-user. Ultimately, such cost reductions enable the network operators to pass on the concomitant cost savings to the end-users.

Accordingly, a new breed of service-centric networks (distinct from the existing voice-centric and data-centric networks) are being explored for implementation on what is known as the next-generation network (NGN) infrastructure, where integrated voice/data/video applications may be provisioned using a packet transport over a packet network in an end-to-end transmission path. As alluded to hereinabove, it is believed that using a packet network infrastructure in access networks provides higher transmission efficiency, lower operation and maintenance costs, and a unified access.

Traditional access systems allow accessing a digital local voice switch, such as a Class 5 switch, by extending a plurality of metallic loops and aggregating them in a bundle for efficiently transmitting the time-division multiplexed (TDM) voice traffic. Typically, such access networks are architected using one or more access nodes in a variety of configurations, e.g., point-to-point chains, rings, etc. Each access node itself comprises several channel banks that provide line interfaces servicing a large number of subscribers. In order to be able to meet projected subscriber growth and associated demand for services, the access nodes are typically over-designed in the sense that a high number of channel banks (e.g., upwards of 8 banks or more) are provisioned for each node at the outset. Additionally, the internal architecture of a conventional access node is such that the banks are interconnected in a "star" configuration, with a centralized "head star" bank coupled to a plurality of satellite banks (i.e., a hub-and-spoke arrangement).

Those skilled in the art should recognize that the conventional "full-provisioning" approach to implementing an access network is beset with several disadvantages. First, the up-front cost of setting up the network can be prohibitively high. Moreover, the increased cost structure will be particularly inefficient where only a small number of subscriber lines need to be supported intially, especially in an access node with a star architecture that is not fully populated. In addition, unrelated to the cost structure factors, the implementation of most conventional access nodes is fraught with internal inefficiencies also, as the local data traffic within the node requires unwieldy protocol conversions. Further, the local links for effectuating bank-to-bank communications are not capable of supporting the bandwidth rates necessary to implement value-added, advanced services that can be provisioned in the NGN.

### SUMMARY OF THE INVENTION

Accordingly, the present invention advantageously provides a scalable architecture for use with an access node terminal disposed in an access network portion, which allows incremental addition of channel banks in the node. A point-to-point, high-speed communication link provided between two adjacent banks of the access node logically interconnects a plurality of banks in a linear stack, thereby creating a stackplane hierarchy. All interbank communications (i.e., traffic internal to the access node, such as data, inter-processor messaging, timing and synchronization) are carried on the stackplane using modified Synchronous Optical Network (SONET) carrier frames. The payload portion of a frame is mapped to hold different types of data in their native mode, e.g., TDM, ATM, and other traffic types, and the overhead portion includes stackplane control and management information.

In one aspect, the present invention is directed to access network element having a scalable architecture, comprising a primary bank including a network interface operable with a transport network and at least one node intraface operable to support a local communication link. Preferably, the local communication link is operable to effectuate at least one full duplex data channel and at least one timing control channel in a SONET-compatible carrier. At least one secondary bank including a node intraface is coupled to the primary bank via the local communication link, wherein the SONET-compatible carrier includes frames with an overhead portion and a payload portion. The overhead portion includes a plurality of control bytes associated with the local communication link and the payload portion includes serialized data mapped to support different types of data channels.

In another aspect, the present invention is directed to scalable network node for use in an access network. A plurality of channel banks interconnected together in a logical linear arrangement form the scalable network node, wherein one of the channel banks operates as a primary bank and the remaining channel banks operate as secondary banks. A first portion of the secondary banks are logically disposed on one side of the primary bank and a second portion of the secondary banks are logically disposed on the other side of the primary bank. The primary bank includes interfaces coupling with a transport network, e.g., a PSN, CSN, or an integrated combination thereof. Each of the channel banks also includes at least one node intraface card and at least cross-connect fabric card. The node intraface card arrangement is operable to effectuate a local communication link with at least one of its adjacent channel banks, in either direction, the local communication link supporting at least one full duplex data channel, an inter-processor messaging bus and at least one timing control channel. The local communication link is architected to carry interbank traffic in SONET-compatible carrier frames, wherein the payload portions can be mapped to carry serialized data traffic, e.g., TDM, ATM, etc. The frame overhead portions comprise a plurality of control bytes relating to the local communication link. In one implementation, the local communication link is architected with redundancy. Control software provided in the primary bank is operable to effectuate a switchover when the active communication link encounters a failure.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary telecommunications network arrangement having an access network portion wherein the teachings of the present invention may be advantageously practiced;

FIG. 2 depicts a high level conceptualization of an access network portion involving a loop carrier in conjunction with a central office;

FIG. 3 depicts an exemplary embodiment of a loop carrier system having a plurality of nodes (or, terminals) wherein the scalable architecture of the present invention may be provided in a terminal in accordance with the teachings of the present patent application;

FIG. 4 depicts an exemplary ring topology involving multiple central office terminals (COTs);

FIG. 5 depicts a high level block diagram of an exemplary access node terminal having the scalable architecture of the present invention, which terminal may be operable as a COT or as a remote terminal (RT) in an access network;

FIG. 6 depicts additional details of the exemplary access node terminal shown in FIG. 5, wherein a primary bank and a plurality of secondary banks are coupled thereto via a stackplane for scalability;

FIG. 7 depicts a functional block diagram of a portion of the exemplary access node terminal exemplifying various interfaces to effectuate the scalable stackplane architecture of the present invention;

FIG. 8 depicts a functional block diagram of an interface portion used for effectuating a high-bandwidth, bidirectional local communication link via the stackplane between two shelves or channel banks of the exemplary access node terminal;

FIG. 9 depicts a graphical representation of the various communication channels bundled within the stackplane's local communication link;

FIG. 10 depicts an exemplary SONET-like frame used for carrier transport in the stackplane in accordance with the teachings of the present invention;

FIG. 11A depicts a functional block diagram of a primary bank's node intraface block portion for effectuating the TDM functionality in the stackplane;

FIG. 11B depicts a functional block diagram of a secondary bank's node intraface block portion for effectuating the TDM functionality in the stackplane;

FIG. 12A depicts a functional block diagram of a primary bank's node intraface block portion for effectuating the ATM functionality in the stackplane; and

FIG. 12B depicts a functional block diagram of a secondary bank's node intraface block portion for effectuating the ATM functionality in the stackplane.

### DETAILED DESCRIPTION OF THE DRAWINGS

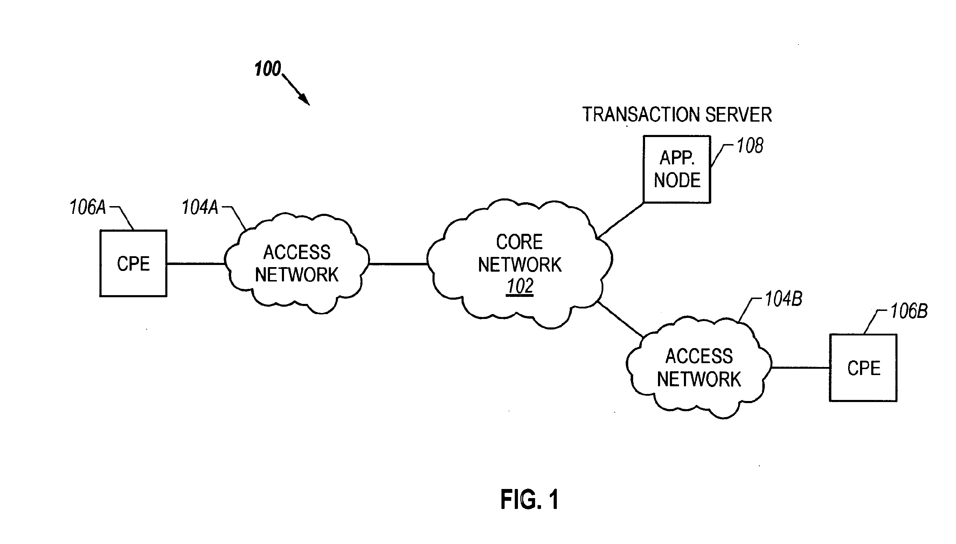

In the drawings, like or similar elements are designated with identical reference numerals throughout the several views thereof, and the various elements depicted are not necessarily drawn to scale. Referring now to FIG. 1, depicted therein is an exemplary network arrangement 100 having one or more access network portions, wherein the teachings of the present invention may be advantageously practiced for providing a scalable architecture for an access network element. The exemplary network arrangement 100, comprising a core transport network 102 and access network portions 104A and 104B, is preferably operable to support telecommunications, data communications, or any combination thereof involving diverse media such as voice, audio, video, graphics, data, and assorted multimedia. The core transport network 102 may be provisioned as a circuit-switched network (CSN), packet-switched network (PSN), or an integrated hybrid network capable of next-generation network (NGN) service infrastructure. In an exemplary embodiment, the Public Switched Telephony Network (PSTN) (for wireline communications), the Public Land Mobile Network (PLMN) (for wireless communications), or any combination thereof may be provided as the CSN. Where the core network 102 is implemented as a packet network, it may preferably be comprised of a network operable with Internet Protocol (IP), Frame Relay, ATM, and/or other applicable technologies.

The access network portions 104A and 104B are disposed between end users (i.e., subscribers) exemplified by customer premises equipment (CPE) 106A, 106B, and the core network 102. It should be appreciated that although isolated CPE units are illustrated in this FIG., they may also be disposed in a private network such as a home area network (HAN), customer premises network (CPN), or a premises distribution network (PDN). Furthermore, the CPE units may be comprised of any known or heretofore unknown Integrated Access Devices (IADs) operable with diverse media. The access network portions 104A, 104B are operable to provide remote access to the subscribers by means of various Point-of-Interface (POI) nodes and Point-of-Presence (POP) nodes interconnected via any suitable wireline, wireless, narrowband, or broadband local network. By way of example, such a local network may be implemented using well known technologies such as the Integrated Services Digital Network (ISDN), Digital Subscriber Line (DSL) and its variants, Fiber In The Loop (FITL) and its variants, Hybrid Fiber/Coaxial (HFC) cable technologies, or Wireless Local Loop (WLL) technologies. Additionally, the exemplary access network portions 104A and 104B may be comprised of a converged local network in further embodiments of the present invention.

Continuing to refer to FIG. 1, reference numeral 108 refers to a transaction server provided as an application node that is exemplary of a service provider operable to provide various telecom, datacom and/or integrated multimedia services to the subscribers. Although the exemplary application node 108 is illustrated as a single isolated node directly coupled to the core network 102, a private network comprising the application node 108, among others, may be provided with its own POI infrastructure in relation to the core network 102.

In a presently preferred exemplary embodiment of the present invention, the access network portion (e.g., access network 104A or 104B) is provided as a fiber-based loop carrier system that can be implemented in various embodiments depending on cost, availability of appropriate local infrastructure, services supported, etc. For example, implementations such as Fiber To The Home (FTTH), Fiber To The Curb (FTTC), Fiber To The Neighborhood (FTTN), and other FITL variants may be architected as a digital loop carrier (DLC) for providing integrated, broadband access services to the subscribers.

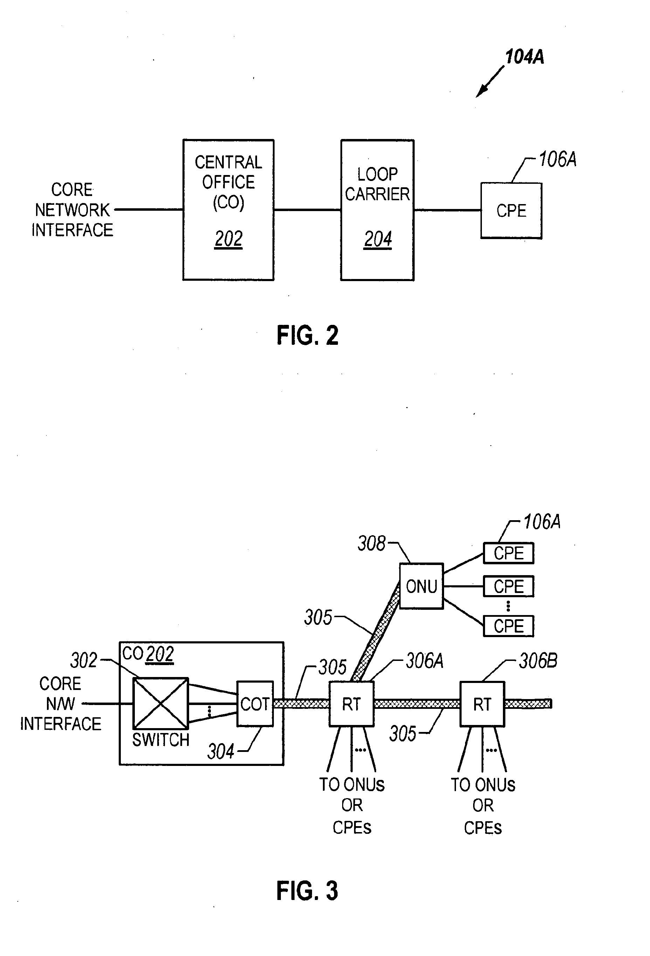

The fiber-based loop carrier system is preferably at least operable with a suitable physical layer infrastructure such as the Synchronous Optical Network (SONET) technology or its companion, the Synchronous Digital Hierarchy (SDH), which is similar to SONET except that its multiplexing hierarchy is a subset of the SONET multiplexing scheme. FIG. 2 depicts a high level conceptualization of the exemplary access network portion (e.g., access network 104A) involving a loop carrier 204 in conjunction with a central office (CO) 202. An exemplary IAD, for instance CPE 106A, is coupled to the loop carrier 204 that is operable to multiplex the access loop signal between the subscriber equipment and the CO with other loop signals. The POI equipment located at the CO is operable, in turn, to provide interface connectivity to the core transport network.

In accordance with the SONET requirements, the loop carrier 204 is preferably operable with a broad range of Optical Carrier (OC) signals, e.g., OC-3, OC-12, OC-48, et cetera, and the electrical equivalents corresponding thereto, namely, Synchronous Transport Signal (STS)-3, STS-12, STS-48, et cetera. SONET, as the name implies, uses a synchronous transmission scheme, with a SONET frame transmitted every 125 microseconds. Each frame is logically organized as a two-dimensional array of bytes whose size is dependent on the channel rate. The basic SONET channel is an STS-1 (corresponding to OC-1) which consists of frames that have 810 bytes organized in 9 rows by 90 columns. At 8,000 frames per second, this gives a raw channel rate of 51.84 Mbps. Since the overhead for managing SONET line and section equipment consumes 3 of 90 columns (leaving 87 columns of payload, called the Synchronous Payload Envelope or SPE) and the path overhead typically comprises one column, a net user data rate of 49.536 Mbps (86 columns x 9 rows x 8 bits x 8000 frames/second) is available per STS-1 channel.

Data rates higher than STS-1 are obtained by multiplexing multiple STS-1 signals. For example, three STS-1 signals can be byte-interleaved to form an STS-3 signal that operates at 155.52 Mbps. Another form of multiplexing is to concatenate the overhead and payload bytes of multiple STS-1 signals, for example, where an STS-3c frame contains 9 overhead columns and 261 columns for the SPE, giving rise to the data rate of 155.52 Mbps. In the general case, an STS-n frame is an electrical signal having n-tuples of STS-1 frames which, when modulated over an optical carrier, is referred to as an OC-n optical signal.

Transmission rates lower than STS-1 can be obtained by subdividing the payload into what are known as Virtual Tributaries (VTs) which can support data rates from Digital Signal (DS)-1 (operating at 1.544 Mbps) to DS-2 (6.312 Mbps). An STS-1 signal can be logically divided into VTs having separate identities, whereby each VT is operable to carry the same amount of payload through the fiber. Because the data within each VT retains its own ID, it can be easily separated from the rest of the STS-1 signal. Accordingly, where a loop carrier system traverses a number of nodes or sub-nodes (i.e., partitions or shelves within a node) appropriate VTs may be "dropped" at each node/sub-node for processing. VTs are also useful when a SONET-based access network interfaces with another network based on the Pleisochronous Digital Hierarchy (PDH) which is built upon DS-0 (64 Kbps) channels. As will be described in greater detail hereinbelow, a scalable nodal architecture can be advantageously provided by utilizing a SONET-like carrier transport system in accordance with the teachings of the present invention, wherein the add/drop functionality is beneficially implemented within the context of the local (i.e., internal) inter-shelf communications as well.

Referring now to FIG. 3, depicted therein is an exemplary embodiment of a fiber-based loop carrier system having a plurality of nodes wherein a scalable inter-shelf architecture may be realized in a node. The loop carrier nodes, which may also be referred to as access network nodes or terminals (more generically, telecommunications nodes), may be organized in one of several topologies for purposes of the present invention and are comprised of two forms depending on their location in the access loop. When co-located at a CO, the loop carrier node is referred to as a central office terminal (COT). Reference numeral 304 exemplifies a COT coupled to a CO switch 302 that forms part of CO 202. Other loop carrier nodes external to the CO are referred to as remote terminals (RTs), e.g., RT 306A and 306B.

Fiber paths 305, preferably operable to carry signals of OC-3 or higher rates, are used for interconnecting the COT and RTs in a particular topology. Where only one RT is coupled to the COT, the resultant two-node arrangement is referred to as a point-to-point loop carrier system. On the other hand, if multiple RTs are coupled in a linear fashion, either a single feeder multiple RT (MRT) system or a dual feeder MRT system may be obtained. In a single feeder MRT system, the RTs are located on only one side of the COT, as exemplified in this FIG. In the dual feeder MRT system, the RTs are disposed on both sides of the COT, which sides are conventionally referred to as "East" and "West" sides. Accordingly, fiber optic cables emanate from the COT and run in two different directions relative thereto, each branch feeding one or more RTs.

In a further exemplary embodiment, the loop carrier system may be arranged in a ring topology. For example, a unidirectional path switched ring (UPSR) topology is obtained where the westernmost and easternmost nodes of a dual feeder MRT are connected to each other. As a matter of convention, the East direction from the COT carries the communication traffic, whereas the West direction from the COT is provided as the "protect" direction in case there is a failure in the East direction cable (e.g., it is cut) or its performance degrades to a predetermined level.

Regardless of the particular topological configuration used for implementing a DLC, either the COT, RTs, or both may be provided with the capability to concentrate the total access lines connected thereto. That is, the total number of lines to which a terminal is connected may be greater than the maximum number of active lines supported by it. Accordingly, each terminal may have its own concentration ratio (which is the ratio between the total number of connection lines and the maximum number of active lines supported by the terminal).

In addition to the COT and RT access loop nodes, the exemplary loop carrier system may also include other equipment such as Optical Network Units (ONUs) that serve end users that are far enough away from each other that it isn't economical to connect all of them to an RT. The ONUs are operable to convert the signals between electrical and optical domains, if necessary. Also, the ONUs digitize the analog communication signals from a plurality of customers and multiplex them onto a piece of fiber coupled to the RT. In FIG. 3, reference numeral 308 refers to an ONU that is coupled to RT 306A and serves, by way of example, IAD/CPE 106A. Further, an RT in the loop carrier system may be coupled to one or more ONUs and RTs, in addition to the CPEs directly served by the RT.

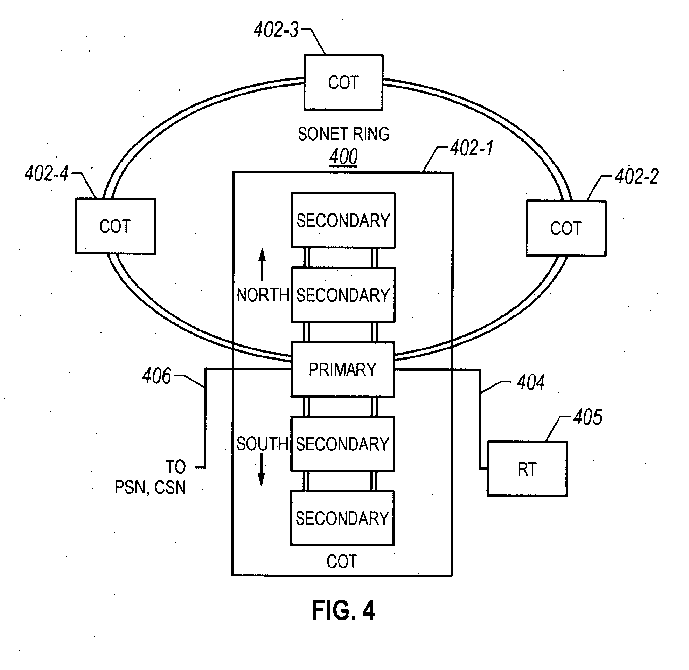

FIG. 4 depicts an exemplary SONET ring topology 400 involving multiple terminals. A plurality of COTs 402-1 through 402-4 are connected together in the ring configuration that may be implemented as an UPSR or a bidirectional line switched ring (BLSR). COT 402-1 is particularly exemplified with a plurality of shelves organized in a scalable architecture, wherein the primary shelf is shown with network transport interfaces 406 towards a PSN, CSN, or a combination thereof. A point-to-point SONET link 404 is also exemplified between the primary shelf of COT 402-1 and an RT 405.

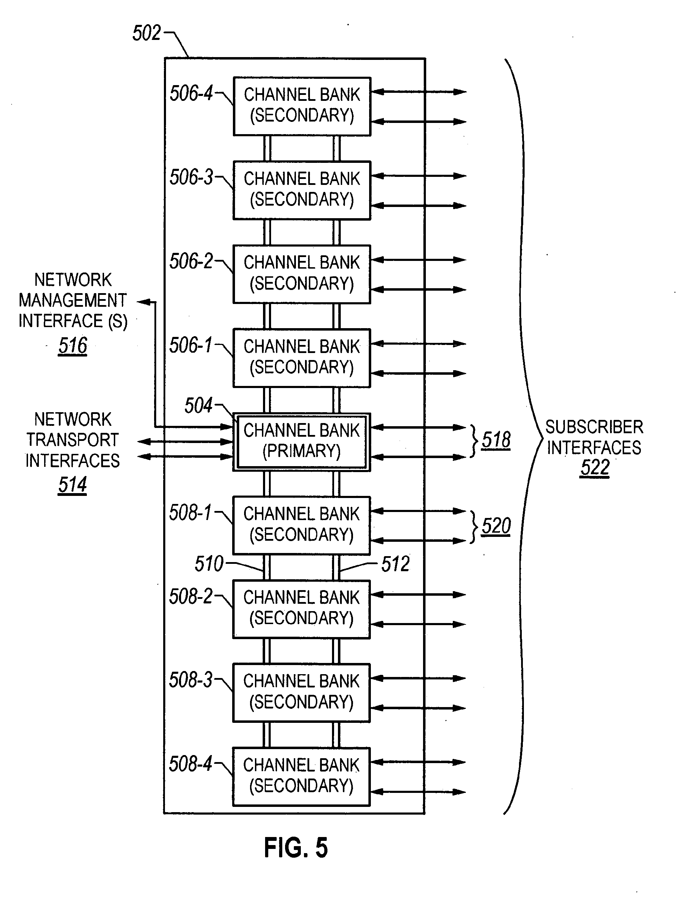

Referring now to FIG. 5, depicted therein is a high level block diagram of an exemplary access node terminal 502 operable as a COT or an RT in an access network, which terminal is provided with the scalable architecture of the present invention. Preferably, the exemplary terminal 502 is provided as an expandable "linear stack" of a plurality of shelves or channel banks which include a primary shelf 504 and a number of secondary shelves logically disposed both above and below the primary shelf. The various secondary shelves are coupled to the primary shelf 504 via a redundant, bi-directional local communication link that includes appropriate inter-shelf data channel(s) and timing/control channel(s). In FIG. 5, reference numerals 510 and 512 refer to the two redundant local communication links, wherein one is provided to be active while the other is operable as a standby link for effectuating protection switchover. As will be described in greater detail hereinbelow, the local communication links interfacing the adjacent channel banks are provided to be internal to the access node 502 and are architected to carry all the internal, full duplex data channels and timing information in SONET-type carrier frames that are mapped in accordance with the teachings of the present invention to transport the interbank communications. For purposes of the present invention, these local interfaces effectuate a logical communication plane that can be scaled in order to "stack" as many channel banks as are needed and thus may be referred to as a "stackplane" in terms of the internal architecture of the node. Accordingly, the various secondary shelves logically disposed on one side of the primary shelf 504 comprise what may be referred to as the "North" segment of the stackplane. For instance, secondary shelves 506-1 through 506-4 form the North stackplane segment. In similar fashion, secondary shelves 508-1 through 508-4 comprise the South segment of the stackplane.

The access node terminal 502 is provided with a plurality of subscriber interfaces 522 to which various IAD/CPEs may be coupled. The subscriber interfaces 522 can include subscriber interfaces 518 associated with the primary shelf 504 as well as subscriber interfaces 520 associated with secondary shelves, e.g., shelf 508-1. On the network side of the terminal, a plurality of transport network interfaces 514 and network management interfaces 516 are provided as part of the primary shelf's interfacing functionality. As alluded to in the foregoing, various transport networks such as a CSN, PSN, or an integrated network may be coupled to the primary channel bank 504 via the interfaces 514.

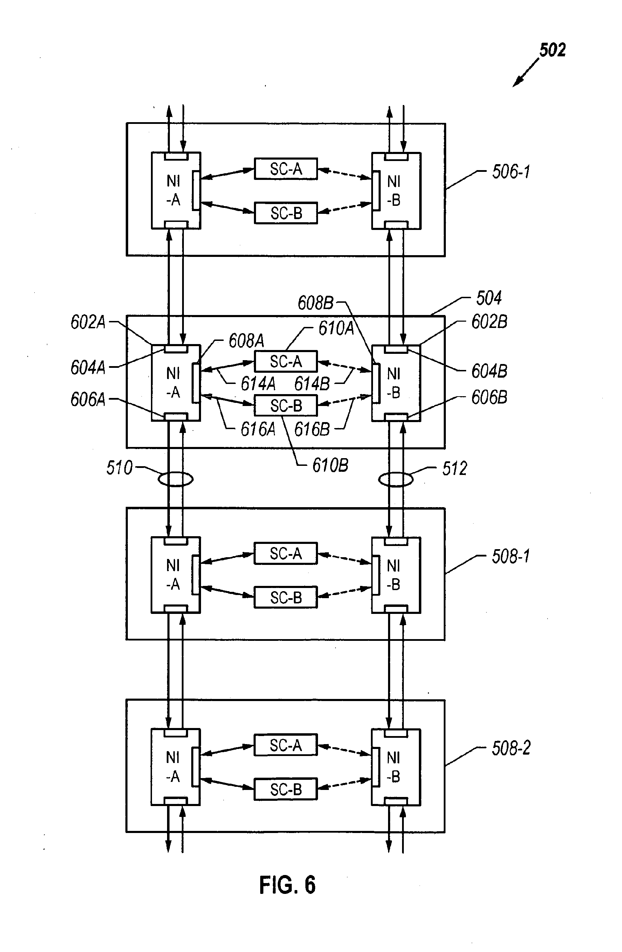

FIG. 6 depicts a functional block diagram of a portion of the access node terminal 502 to illustrate additional details relating to the nodal stackplane architecture provided in accordance with one exemplary embodiment of the present invention. Each channel bank includes a pair of local interface cards for effectuating interbank communication via redundant stackplane links 510 and 512. For purposes of this patent application, these local interface cards are referred to as "node intraface" or NI cards to signify the interbank interfacing. Further, the NI cards may be implemented to be compatible with an optical or electrical medium. In optical implementation, the NI cards are designated as NIO cards. Similarly, the NI cards are designated as NIE cards when implemented to be operable electrically. In a generic way, an NIx card may refer to either an NIO card or an NIE card.

Furthermore, each channel bank is also provided with a pair of cross-connect fabrics implemented as switch cards (SC's). It should be appreciated that dual card implementation is operable to effectuate redundancy protection with respect to switch card failure. Each SC is operable with both NI cards of a bank via full duplex interfaces. When integrated with the bank's NI cards, however, a failure in one of the switch cards in a bank may necessitate a switchover of the node's entire active stackplane link to the standby stackplane link.

Specifically referring now to the primary channel bank 504, various local interfaces for effectuating the redundant stackplane architecture of the access node are described. Reference numerals 602A and 602B refer to the two NI cards (NI-A and NI-B) provided in the primary bank 504. Each NI card includes two stackplane (SP) interfaces - one towards the adjacent bank in one direction (e.g., the North direction) and the other towards the adjacent bank in the other direction (e.g., the South direction). For instance, NI-A card 602A is provided with interface 604A for coupling with the secondary channel bank 506-1 and with interface 606A for coupling with the secondary channel bank 508-1. In similar fashion, NI-B card 602B includes interfaces 604B and 606B for coupling with the secondary channel banks 506-1 and 508-1, respectively.

Further, as alluded to hereinabove, each NI card includes an interface towards the SC pair of the bank. Reference numeral 608A refers to the SC interface of NI-A card 602A towards SC-A 610A (via switch card path 614A) and SC-B 610B (via switch card path 616A) of the primary bank 504. Similarly, NI-B card 602B is provided with interface 608B towards SC-A and SC-B cards, via switch card paths 614B and 616B, respectively.

As will be seen hereinbelow in further detail, the stackplane interfaces provided with each channel bank allow any number of secondary banks to be added, in the North or South segments of the stackplane, on an "asneeded" basis so that the DLC nodal infrastructure can be incrementally provisioned or upgraded depending upon subscriber volume and services to be supported. The provision of dual redundancy, in the interbank SP links as well as internal bank switch cards, imparts a high degree of reliability to the access node architecture. In an exemplary configuration of the node at reset/restart, all channel banks may use the default active stackplane (e.g., stackplane-A) and switch cards (e.g., SC-A). When the SC-A of a particular bank fails for some reason, that bank simply switches over to SC-B while the stackplane-A is still maintained for all interbank communications. Thus, it is possible in an evolved configuration of the node to have one or more banks operating with the SC-A and one or more banks operating with the SC-B. If the currently active stackplane fails (due to, e.g., NI-A card failure in a particular bank, a local SP link segment is cut, et cetera), all banks switch to the standby stackplane (i.e., stackplane-B). The banks do not have to change the SC cards, however, where the NI and SC functionalities are not integrated into a single card.

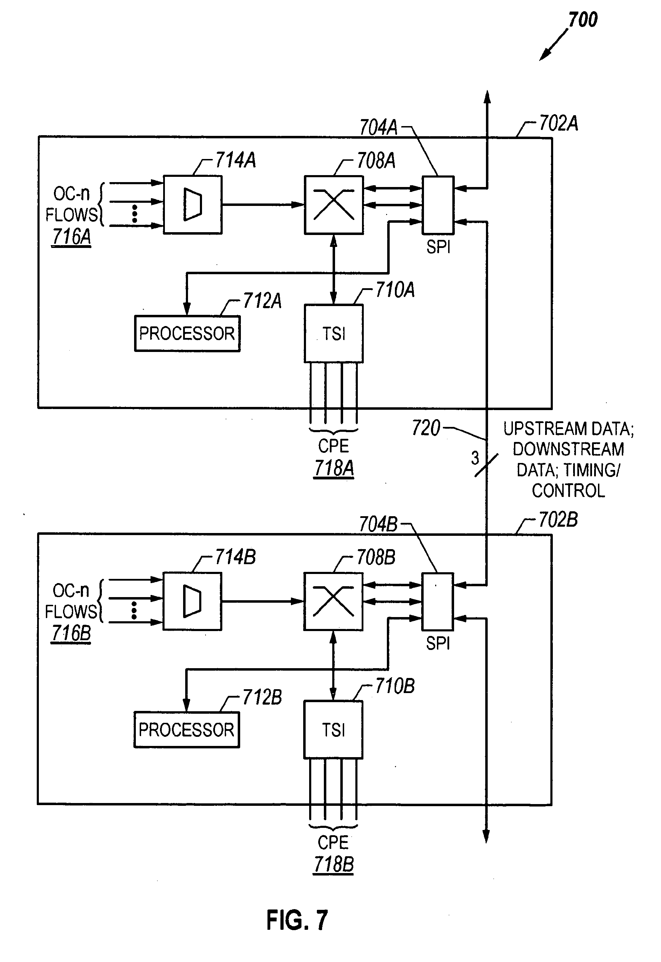

Referring now to FIG. 7, shown therein is a functional block diagram of two adjacent channel banks 702A and 702B of an exemplary access node 700 that illustrates various components with respect to one of the two redundant stackplanes of the node 700. It should be apparent to those skilled in the art that the two adjacent channel banks 702A and 702B are exemplary of the banks (e.g, primary bank 504 and the plurality of secondary banks coupled thereto) shown in FIGS. 5 and 6.

Each exemplary channel bank is preferably provided with a multiplexer for multiplexing various OC-n flows. For example, reference numeral 714A refers to a flow multiplexer disposed in channel bank 702A that combines OC-n flows 716A provided thereto. Similarly, flow multiplexer 714B combines the OC-n flows 716B associated with channel bank 702B. The combined OC-n flow is forwarded to a DS0 multiplexer or MUX (also referred to as a space switch). Subscriber lines associated with the various CPE served by the channel banks are coupled to a Time Slot Interchange (TSI) that provides local switching. Illustratively, reference numerals 708A and 708B refer to the DS0 space switches of channel banks 702A and 702B, respectively. TSI 710A associated with channel bank 702A and TSI 710B associated with channel bank 702B are in a communication relationship with the respective DS0 space switches 708A and 708B. Further, reference numerals 718A and 718B refer to the CPE lines serviced by channel banks 702A and 702B, respectively.

Continuing to refer to FIG. 7, each channel bank is provided with a local processor operable to effectuate High level Data Link Control (HDLC) communications via the stackplane by utilizing an Inter-Processor Communication (IPC) band associated therewith. Processors 712A and 712B are representative of the local processors associated with channel banks 702A and 702B. A high-level stackplane interface (SPI) block is illustrated with respect to each channel bank that is operable to effectuate (i.e., drive, receive, and convert) the various communication channels as part of the interbank stackplane communication link associated with the particular bank. As shown in this FIG., channel banks 702A and 702B respectively include SPI blocks 704A and 704B, wherein the SPI blocks are generically representative of the NI card interfaces (e.g., interfaces 604A, 606A and 608A) shown in FIG. 6. Each channel bank's DS0 MUX, TSI and local processor are accordingly interfaced to the SPI block, which provides the overall functionality associated with the NI interfaces.

Essentially, the SPI block is operable to provide a bi-directional serialization/deserialization functionality coupled with interleaving, so as to effectuate a high-speed interbank communication link 720 that comprises an upstream data path, a downstream data path and a bi-directional timing/control path. Preferably, the interbank communication carried on SP link 720 is based on SONET technology, but without any standards-based external interfaces to the users. Thus, the SP link 720 is a purely internal communication link for transporting all interbank traffic (data, timing synchronization, control, IPC, internal protocol encapsulation, et cetera). From this perspective, the stackplane of an access node can be viewed as a concatenation of point-to-point, full duplex serial bus segments, running at speeds in the range of up to a few Gigabits/second. In a presently preferred exemplary embodiment of the present invention, the SP traffic carrier format is based on SONET framing that is modified in accordance herewith for appropriately mapping the diverse traffic information into SONET frame payload (i.e., SPE). Furthermore, as will be described in greater detail below, the SONET overhead portion is utilized for SP link control and monitoring. Accordingly, although standards-compatible framing is used for the interbank traffic, it should be appreciated that it is the modified SONET (i.e., "pseudo-SONET" or SONET-compatible) frames that actually carry the traffic.

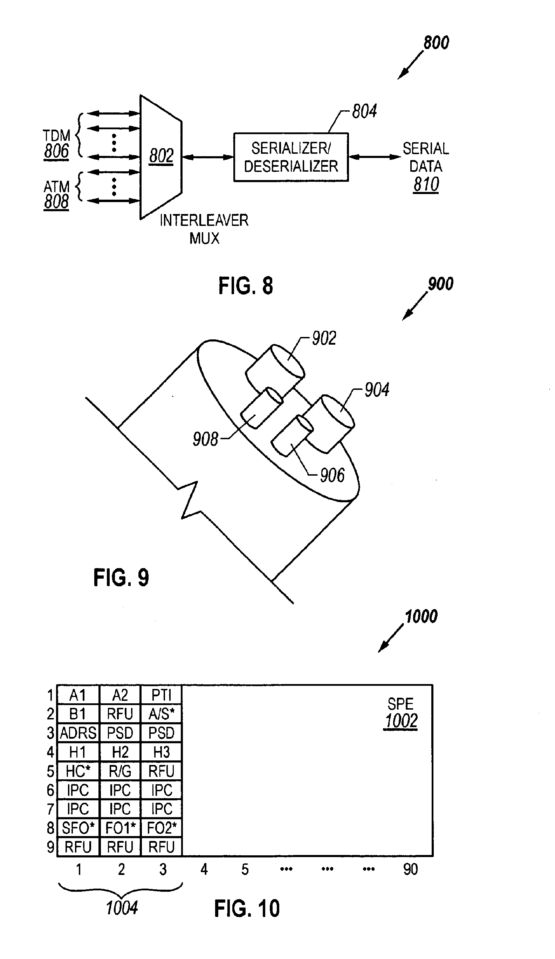

As pointed out before, various traffic types can be combined into serial data for egress transport (i.e., to another channel bank, either in the North or South directions). Upon receipt, the serialized data is deserialized for local switching or multiplexed again for further transport. In one exemplary embodiment, the data channels of the local SP link are operable to carry multiple types of data, e.g., TDM and ATM data, in addition to other types. FIG. 8 depicts a portion 800 of the SPI functional block for carrying out the serialization/deserialization functionality. As shown in this FIG., an interleaver MUX 802 is operable with a plurality of TDM channels 806 and a plurality of ATM channels 808, which are preferably byte-interleaved. In one implementation, up to a total of 32 data channels may be interleaved. The interleaved data is serialized (or, deserialized in the opposite direction) by a serializer/deserializer 804 to generate serialized data 810. Overhead associated with serialization may also be included in the serialized data.

FIG. 9 is a channelized view of an exemplary SP communication link 900 that provides a graphical representation of the various communication channels bundled therewith. Reference numerals 902 and 904 refer to the data pipes operable to carry TDM, ATM or other types of data. In one implementation, 12 STS-1 signals are utilized to carry TDM data, giving rise to a rate of 594 Mb/s that can be mapped to 8,064 DS0 channels. In another configuration, 20 STS-1 signals are used for carrying ATM data. Thus, the resultant bandwidth rate of 990 Mb/s can be used transport about 1.9 million ATM cells per second.

Reference numeral 906 refers to the stackplane's IPC bus operable to carry interbank HDLC communications. In an exemplary embodiment, the IPC bus is implemented as a 4 Mbps shared bus, with a hardware anti-collision scheme and a round-robin based bandwidth allocation methodology. Preferably, the SPI block in each bank is operable to terminate the local IPC buses and extend the local IPC bus to enable the interbank processor messaging. Interbank timing, synchronization and control information is transported via a separate timing/control channel 908 of the SP link 900. The system timing is distributed from the primary channel bank, where preferably two redundant reference clocks reside, to the secondary channel banks. Additional details with respect to time base generation and interbank synchronization may be found in the following commonly owned co-pending patent application(s): "Clock Synchronization System And Method For Use In A Scalable Access Node," filed , Ser. No.: , (Attorney Docket No.: 1285-0091US), in the name(s) of Eric Friedrichs and Bracey J. Blackburn, which has (have) been cross-referenced hereinabove.

Referring now to FIG. 10, shown therein is an exemplary SONET-compliant frame 1000 used for carrier transport in the stackplane in accordance with the teachings of the present invention. Preferably, a plurality of frames such as frame 1000 are interleaved into a superframe carrier for the stackplane. As has been described earlier, SONET-compliant frame 1000 includes an overhead portion 1004 and a payload (SPE) portion 1002. The three columns, each byte wide, of the overhead portion 1004 are particularly exemplified herein, which include stackplane control information for purposes of the present invention. Bytes A1, A2, B1, and H1-H3 are valid SONET bytes used in accordance with the GR-253-CORE standard. The carrier payload type is indicated by a Payload Type Identifier (PTI) byte. In one implementation, $0F indicates TDM data and $F0 indicates ATM data in the SPE. The active status of the stackplane is defined by A/S* byte, where $0F indicates that the stackplane is in standby mode and SFO indicates that the stackplane is active. This byte is used only in the first STS-1 frame of a superframe (e.g., an STS-12 superframe). Furthermore, the A/S* byte is used in the egress direction only.

Individual banks are identified by a bank address (ADRS) byte which is used to confirm which STS-1 from a superframe is employed to report the status registers of each bank. Preferably, this address is the same as the IPC bank number. Protection Switching Diagnostics (PSD) bytes are used for reporting by each bank's SC/NI card to report its own status as well as the status of its redundant mate card to the primary bank. A dynamic bank address linked to a bank's relative position in the stackplane chain is provided by a Hop Count (HC*) byte. For instance, 0x00 corresponds to the primary bank, 0x01 to the bank directly connected to the primary bank, etc. It should be appreciated that this byte may also be used to detect a change in the topology of a node's stackplane architecture as it is modified, upgraded, etc. A request/grant (R/G) byte is used to implement an anti-collision scheme for the IPC messaging on the stackplane (i.e., avoidance/resolution of the IPC bus contention). Up to six IPC bytes are provided with respect to interbank HDLC link data and control. Frame offset (FO*) and superframe offset (SFO*) information is provided as part of an alignment protocol used for the stackplane. In general, the various SP control bytes set forth above are defined for both egress and ingress directions (in relation to the primary bank), except as otherwise noted. For instance, ADRS and PSD bytes are used only in the ingress direction, whereas A/S* byte is valid in the egress direction only. As a matter of convention, a * symbol is used to denote where the control byte defined in the first STS-1 frame only. If the * symbol is not used, then the control byte is used in each STS-1 frame of the superframe carrier.

Continuing to refer to FIG. 10, the SPE portion 1002 of frame 1000 is used for mapping appropriate data channels. With respect to TDM traffic, in one implementation, the stackplane link can be viewed as a high-speed shared bus between the banks, with no anti-collision scheme (i.e., a bank may overwrite the data written on the TDM band by another bank). Three layers of granularity, which can be provisioned by the bank's control memory software, may be provided in each local bank with respect to insertion, extraction, and loopback of data. These layers are: STS-1, VT1.5, and DS0. For effectuating a VT1.5 structure, the following mapping scheme is used: 3 columns of SPE per VT and 3 overhead bytes per VT, giving rise to 8 x 3 = 24 bytes of data per VT.

With respect to ATM data transport, the stackplane link is a shared bus between the banks, but with a master (e.g., the active ATM cross-connect fabric in the primary bank) and an anti-collision scheme (i.e., a suitable request/grant protocol is used). As alluded to hereinabove, a payload capacity of up to 20 STS-1 frames may be provisioned. In order to reduce the complexity of the implementation of the ATM routing on the stackplane, an overhead containing the ATM request/grant protocol bits and bank destination address may be added to each ATM cell transported by the stackplane carrier. In one packaging scheme, up to 12 ATM cells are mapped to the SPE portion 1002.

Based on the foregoing discussion, the following layered rendition of the stackplane hierarchy of the present invention may be set forth. At hardware level, i.e., Physical Layer 1, various drivers, receivers, converters of the SPI functionality and the transmission medium itself are implemented for effectuating the transmission and reception of data. A port (Link Layer 2 component) is built upon the Physical Layer, and is created within the NIx cards preferably by the duplex pairing of Layer 1 components. A protocol is introduced to establish a duplex link (also a Link Layer 2 component) over the media spanned between the ports. It should be appreciated that Layer 2 entities of the present invention are roughly analogous to the section equipment of a SONET system. A chain (Network Layer 3 component) is built upon the Link Layer ports, links and underlying media, and supports an extension of network services throughout the stackplane. The SP structure provides for the inbound and outbound flow of Network Layer 3 data (ATM cells and TDM DS-n packets) across a plurality of chains within the node. Analogously, Layer 3 entities can be equated with the line components of a SONET system. A path (Transport Layer 4 component) is built upon the Network Layer 3 chains (or sub-nets), and routes the network traffic through a cross-connect fabric of the node. Layer 4 entities are analogous with the path components of a SONET system.

It should be seen that the stackplane exists as a Layer 1 - Layer 3 structure with respect to an access node and provides a scalable architecture that advantageously allows incremental addition of banks with minimal downtime, cost and administration oversight. The following discussion now focuses on the various NIx interfaces provided as part of an exemplary stackplane implementation.

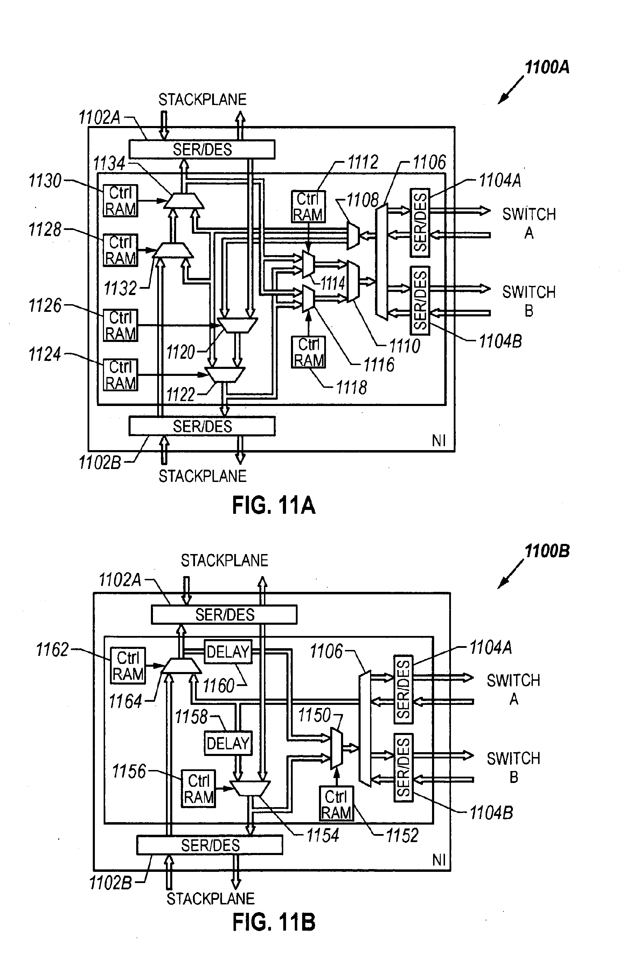

FIG. 11A depicts a functional block diagram of a primary bank's NIx block portion 1100A for effectuating the TDM transport functionality in a stackplane. A pair of serializer/deserializer blocks 1102A and 1102B are provided, one with respect to the North-facing stackplane segment and the other with respect to the South-facing stackplane segment, for serializing the egress data (i.e., data going out from the bank) and for deserializing the ingress data (i.e., data coming into the bank). Also, another pair of serializer/deserializer blocks 1104A and 1104B are included for interfacing with the redundant switch card paths. A MUX 1106 is operable to multiplex and de-multiplex the TDM data that is going out on, or received from, the switch card paths, respectively. The data received from the bank's switch card paths is de-muxed by MUX 1108, which de-muxed data is sent to a plurality of MUX units controlled by control memory software. MUX 1120 multiplexes the data from the switch card paths and the deserialized ingress data from the North-facing stackplane segment under the auspices of control memory 1126. Output from MUX 1120 is provided to another MUX 1122 operating under a control memory 1124. The output from MUX 1122 is operable to be sent to be sent out on the South-facing stackplane segment (via serializer 1102B) for egress transport. Or, a part of the output (including data to be locally routed or data received from the North-facing stackplane and bound for subscriber lines local to the primary bank) may be sent out on the switch card paths via MUX 1114 and MUX 1116 which operate under control memories 1112 and 1118, respectively.

In the opposite direction, data received from the South-facing stackplane is deserialized and provided to MUX 1132 operating under the control of control memory 1128, which MUX is also operable to multiplex the data received from the bank's switch card paths via MUX 1108. Output from MUX 1132 is provided to MUX 1134 which operates under the control of control memory 1130 and multiplexes the data received on the inbound switch card paths, analogous to MUX 1122 operating under control memory 1124. Accordingly, the output from MUX 1134 can be sent out on the egress path of the North-facing stackplane via serializer 1102A, or a portion of it can be sent out (including data to be locally routed or data received from the South-facing stackplane and bound for subscriber lines local to the primary bank) on the outbound switch card paths via MUX 1114/1116, MUX 1110, and the redundant serializer interface 1104A/1104B.

It should be appreciated that the various MUX/DE-MUX combinations and associated control memory software are operable to effectuate the TSI functionality for local routing and/or for pass-through routing, and may be implemented in a suitable field-programmable gate array device.

FIG. 11B depicts a functional block diagram of a secondary bank's NIx block portion 1100B for effectuating the stackplane's TDM transport functionality. It should be readily apparent upon having reference hereto that the NIx block 1100B for a secondary bank is similar to that of the primary bank, with its own control memories for DS0 insertion and extraction. MUX 1150 controlled by control memory 1152 is operable for sending out data on secondary bank's switch card paths via serializer interfaces 1104A and 1104B. MUX 1154 controlled by control memory 1156 is operable to send out data on the South-facing stackplane, or a portion of the data may be looped back to MUX 1150. Similarly, MUX 1164 controlled by control memory 1162 is operable to send out data on the North-facing stackplane, or a portion thereof may be provided to MUX 1150. To ensure proper frame alignment, appropriate delay blocks are also provided. For instance, delay 1158 is inserted into the inbound data received on the switch card paths. Another delay 1160 is provided between MUX 1164 and MUX 1150.

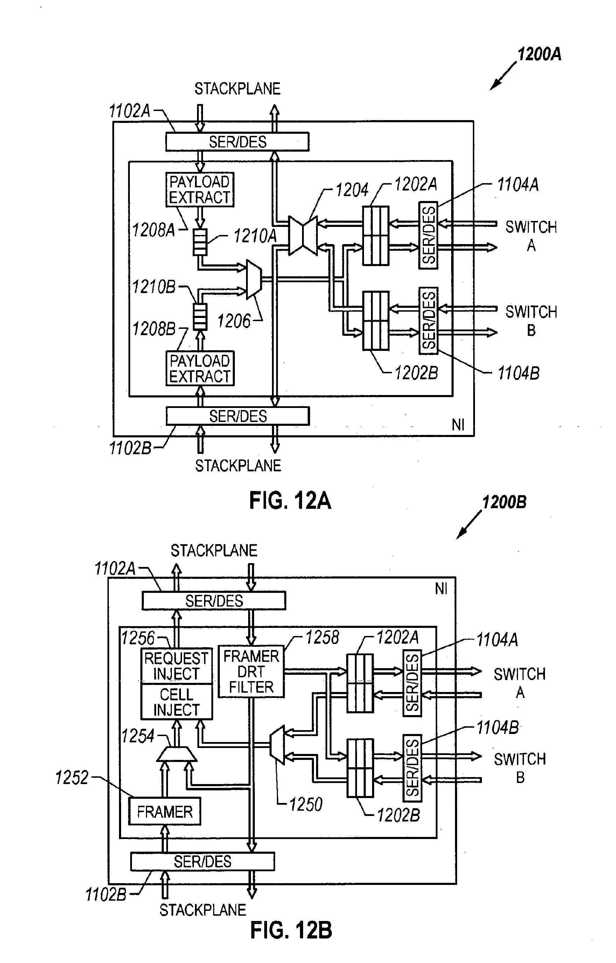

Referring now to FIG. 12A, shown therein is a functional block diagram of a primary bank's NIx block 1200A for effectuating the stackplane's ATM transport functionality. The NIx's ATM functions include: (i) serialization and deserialization for both stackplane and switch card interfacing, (ii) payload extraction from ingress paths of the North- and South-facing stackplanes, (iii) queue merging for data received from the switch card paths, (iv) cell buffering, and (v) egress copy selection and cell routing. Payload extractors 1208A and 1208B are operable to extract ATM cells from the inbound data received on the North-facing and South-facing stackplanes, respectively. The extracted data is queued into in queues 1210A and 1210B before getting merged by MUX 1206. Output from MUX 1206 is first buffered in buffers 1202A and 1202B and then sent out to the switch card paths via serializer interfaces 1104A and 1104B.

In the opposite direction, deserialized ATM data received on the switch card paths is buffered in buffers 1202A and 1202B. Egress cell routing is then effectuated by block 1204, which provides the outbound ATM data to serializers 1102A and 1102B for transporting on the North and/or South stackplane segments.

FIG. 12B depicts a functional block diagram of a secondary bank's NIx block portion 1200B for effectuating the ATM transport functionality of the stackplane. While essentially similar to the ATM functionality of a primary bank's NIx card, the ATM functionality of the NIx card 1200B includes additional aspects such as ingress cell injection, SONET framing, Destination Route Tag (DRT) filtering, and end of chain loopback. Deserialized ATM data received on the North-facing stackplane is first provided to a framer/DRT filter block 1258 whose output can be routed to: (i) buffers 1202A/1202B for sending out on the switch card paths, (ii) serializer 1102B directly, for sending out on the egress path of the South-facing stackplane, or (iii) a MUX 1254 operable to multiplex the loopback path with framed data received from the ingress path of the South-facing stackplane. Framer 1252 is operable to provide SONET framing for the ingress data on the South stackplane segment. Deserialized ATM data received on the switch card paths is buffered in buffers 1202A/1202B and then multiplexed by MUX 1250. Outputs generated by MUX 1254 and MUX 1250 are provided to a control block 1256 operable to perform cell insertion and request insertion. Thereafter, upon serializing the ATM cells, the serial data is sent out on the North-facing stackplane.

Based upon the foregoing Detailed Description, it should be appreciated that the present invention advantageously provides an innovative access node architecture that affords efficient scalability. The internal stackplane hierarchy supports a linear chain of inter-connected banks that can be concatenated with minimal effort and downtime, thereby allowing a network operator to incrementally add extra infrastructure. Interbank stackplane links can be effectuated either on copper wire media for shorter distances (less than about 10 meters) or by using a fiber. By implementing dedicated channels for framing, fault detection, alarms, diagnostics, addressing, data type identification, and activity status, a robust high-speed communication link is provided for transporting interbank traffic. Furthermore, the scalable provisioning of hardware supported by the stackplane architecture in accordance with the teachings of the present invention advantageously affords a cost-effective business model for providing additional, value-added services (involving real time video (e.g., video-on-demand), data, graphics, and multimedia), which spreads the risk factors associated with service provisioning on a broader horizon.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. An access network element having a scalable architecture, comprising:
a primary bank including a network interface operable with a transport network and at least one node intraface operable to support a local communication link, said local communication link for effectuating at least one full duplex data channel and at least one timing control channel in a Synchronous Optical Network (SONET)-compatible carrier; and
at least one secondary bank including a node intraface operable to couple to said primary bank via said local communication link, wherein said SONET-compatible carrier includes frames with an overhead portion and a payload portion, said overhead portion including a plurality of control bytes associated with said local communication link and said payload portion including serialized data mapped to support different types of data channels.

2. The access network element as set forth in claim 1, wherein said at least one full duplex data channel includes a Time-Division Multiplex (TDM) data channel.

3. The access network element as set forth in claim 1, wherein said at least one full duplex data channel includes an Asynchronous Transfer Mode (ATM) data channel.

4. The access network element as set forth in claim 1, wherein each of said primary bank and said at least one secondary bank includes a local processor, and further wherein said local communication link includes a channel for carrying High-level Data Link Control (HDLC) messaging between said local processors.

5. The access network element as set forth in claim 1, wherein each of said node intrafaces includes an interleaver for interleaving multiple data channels into interleaved data and a serializer for serializing said interleaved data.

6. The access network element as set forth in claim 5, wherein each of said node intrafaces further includes a deserializer.

7. The access network element as set forth in claim 6, wherein each of said primary bank and said at least one secondary bank includes a plurality of subscriber interfaces.

8. The access network element as set forth in claim 6, wherein said interleaver is comprised of a byte interleaver.

9. The access network element as set forth in claim 6, wherein said payload portion is mapped to include a plurality of virtual tributaries(VTs), each VT including three columns of said payload portion.

10. The access network element as set forth in claim 10, wherein each of said three columns includes an overhead byte.

11. The access network element as set forth in claim 6, wherein said transport network comprises a circuit-switched network (CSN).

12. The access network element as set forth in claim 6, wherein said transport network comprises a packet-switched network (PSN).

13. A scalable network node for use in an access network, comprising:
a plurality of channel banks interconnected together in a logical linear arrangement, one of said channel banks operating as a primary bank and remaining channel banks operating as secondary banks wherein a first portion of said secondary banks are logically disposed on one side of said primary bank and a second portion of said secondary banks are logically disposed on the other side of said primary bank;
interface means disposed in said primary bank for coupling with a transport network;
at least one node intraface card disposed in each of said channel banks for effectuating a local communication link having at least one full duplex data channel and at least one timing control channel with at least one of its adjacent channel banks, said local communication link operating to carry interbank communication in Synchronous Optical Network (SONET)-compatible carrier frames, wherein said frames include a payload portion and an overhead portion, said payload portion comprising serialized data mapped to support different types of data channels and said overhead portion comprising a plurality of control bytes associated with said local communication link; and
means disposed in said primary channel bank for effectuating a redundant pathway for said local communication link.

14. The scalable network node for use in an access network as set forth in claim 14, wherein said at least one full duplex data channel includes a Time-Division Multiplex (TDM) data channel.

15. The scalable network node for use in an access network as set forth in claim 14, wherein said at least one full duplex data channel includes an Asynchronous Transfer Mode (ATM) data channel.

16. The scalable network node for use in an access network as set forth in claim 14, wherein each of said channel banks includes a local processor, and further wherein said local communication link includes a channel for carrying High-level Data Link Control (HDLC) messaging between said local processors.

17. The scalable network node for use in an access network as set forth in claim 14, wherein said at least one node intraface card includes an interleaver for interleaving multiple data channels into interleaved data and a serializer for serializing said interleaved data.

18. The scalable network node for use in an access network as set forth in claim 18, wherein said payload portion is mapped to include a plurality of virtual tributaries(VTs), each VT including three columns of said payload portion.
